# EUROPEAN PATENT APPLICATION

(11) **EP 3 767 562 A1**
(43) Date of publication of application: **20.01.2021**
(21) Application number: 19186767.0
(22) Date of filing: 17.07.2019
(51) Int. Cl.: G06Q 10/06

(54) **METHOD OF COLLABORATIVE PRODUCTION PLANNING**

(71) Applicant: ABB Schweiz AG, 5400 Baden (CH)
(72) Inventor: HARJUNKOSKI, Iiro, 69469 Weinheim (DE)
(74) Representative: Maiwald Patent- und Rechtsanwaltsgesellschaft mbH

(57) **Abstract**

The present invention relates to a method of collaborative production planning, comprising:
a) determining a top-down production schedule in a top-down manner, the determination comprising utilization of a known or determined target;
b) determining a bottom-up production schedule in a bottom-up manner, the determination comprising utilization of an estimated target; and
c) determining an optimised production schedule comprising comparing the top-down production schedule with the bottom-up production schedule, wherein the comparing comprises utilizing physical and business-level data.

## Description

### FIELD OF THE INVENTION

The present invention relates to a method of collaborative production planning and coordination.

### BACKGROUND OF THE INVENTION

In the hierarchical decision-making system, Enterprise Resource Planning (ERP) for example roughly assumes the production capacity or capability of a plant and assigns a weekly production target. Based on the true capacity the resulting situation may be that the plant is either overloaded (delays) or lots of capacity may be unutilized (underproduction). Under/overestimating the capacities results in huge losses annually.

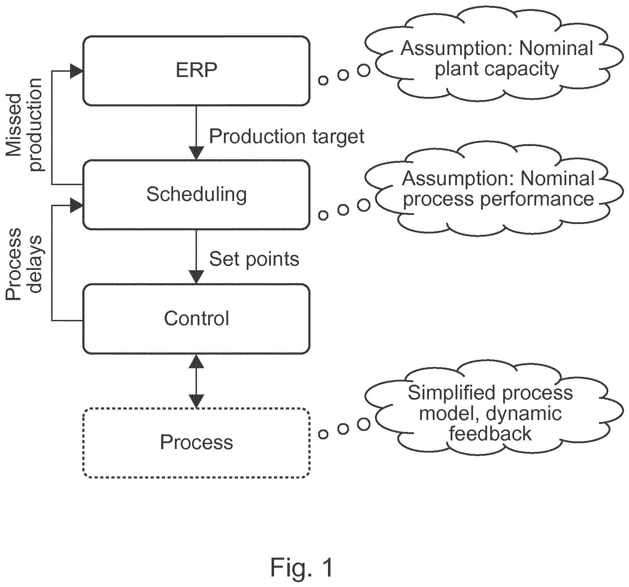

The typical cycle is shown in Fig. 1, where ERP typically does network, procurement and logistic planning, based on, among others, the sales orders and/or sales forecast, raw material inventory levels, and price forecasts. It distributes the production targets top-down using a *nominal plant capacity,* which is often a simple estimate e.g. based on average tonnage throughput with a possible safety margin. This target is given to the plant, which needs to try to meet it as closely as possible. When defining the target, no consideration is done on plant floor practical aspects, such as changeover times, inventory limitations, setups and materials/labor needed, maintenance, transfer times etc. Similarly, when production scheduling then tries to meet the demand targets, it assumes that the production efficiency is constant by using average batch processing times. These batch processing times are used to evaluate the time needed for each product and do not take into account process dynamics, startups, disturbance rejection and other physical features that cannot be planned.

All in all, this assumption-based one-way hierarchy often leads to overestimating or underestimating the processing times and capacity, which also impacts the total results of the production plant. The result is process delays and possibly missed production.

There is a need to address these problems.

### SUMMARY OF THE INVENTION

Therefore, it would be advantageous to have an improved technique to determine production planning in cases where planning and scheduling hierarchy is consirered. In general, the target is always to improve the upper-layer target definition to better match with the lower hierarchical layer that is expected to reach the targets. For illustrative purposes, the continued text focuses on the case where the upper layer is production planning and the lower level does the production scheduling. However, improved technique described here can in principle be realized between any two subordinate hierarchy levels, i.e. planning & scheduling, scheduling & control, where the upper layer provides top-down targets without knowing the full details of the lower layer.

The object of the present invention is solved with the subject matter of the independent claim, wherein further embodiments are incorporated in the dependent claims.
In a first aspect, there is provided a method of collaborative production planning, comprising:
a) determining a top-down production schedule in a top-down manner, the determination comprising utilization of a known or determined target;
b) determining a bottom-up production schedule in a bottom-up manner, the determination comprising utilization of an estimated target; and
c) determining an optimised production schedule comprising comparing the top-down production schedule with the bottom-up production schedule, wherein the comparing comprises utilizing physical and business-level data.

In an example, the optimised production schedule is determined as the top-down production schedule when a value associated with the top-down production schedule is substantially equal to a value associated with the bottom-up production schedule

In an example, when the value associated with the top-down production schedule is not equal to the value associated with the bottom-up production schedule, the method comprises:
d) determining a new target comprising utilization of the top-down production schedule from step a), the bottom-up production schedule from step b), the known or determined target from step a) and the estimated target from step b); and the method further comprises:
repeating step a) using the new target to determine a new top-down production schedule; and
repeating step c) using the new top-down production schedule.

In an example, the optimised production schedule is determined as the new top-down production schedule when a value associated with the new top-down production schedule is equal to, or sufficiently close to, the value of the bottom-up production schedule.

In an example, when the value associated with the new top-down production schedule is not equal to, or sufficiently close to, the value associated with the bottom-up production schedule, the method comprises:
repeating step b) using the new target to determine a new bottom-up production schedule; and
repeating step c) using the new bottom-up production schedule.

In an example, the optimised production schedule is determined as the new bottom-up production schedule when the value associated with the top-down production schedule is equal to a value associated with the new bottom-up production schedule.
In other words, this provides a termination ciriteria, where the final production schedule is determined.

In an example, when the value associated with the top-down production schedule is not equal to the value associated with the new bottom-up production schedule, the method comprises:
repeating step d) and determining a revised new target comprising utilization of the top-down production schedule from step a), the new bottom-up production schedule, the known or determined target from step a) and the new target from step d);
repeating step a) using the revised new target to determine a new top-down production schedule; and
repeating step c) using the new top-down production schedule.

In an example, the optimised production schedule is determined as the new top-down production schedule when the value associated with the new top-down production schedule is equal to the value associated with the bottom-up production schedule.

In an example, when the value associated with the new top-down production schedule is not equal to the value associated with the bottom-up production schedule, the method comprises:
repeating step b) using the revised new target to determine a new bottom-up production schedule; and
repeating step c) using the the new bottom-up production schedule.

In an example, the method is iteratively repeated to determine an optimised production schedule when the value associated with the production schedule determined in the top-down manner is substantially equal to the value associated with the production schedule determined in the bottom-up manner.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic representation of hierarchical top-down decision-making;
Fig. 2 shows a schematic representation of collaborative two-way decision-making; and
Fig. 3 shows a detailed work flow for interactive decision-making between ERP and scheduling.

### DETAILED DESCRIPTION OF EMBODIMENTS

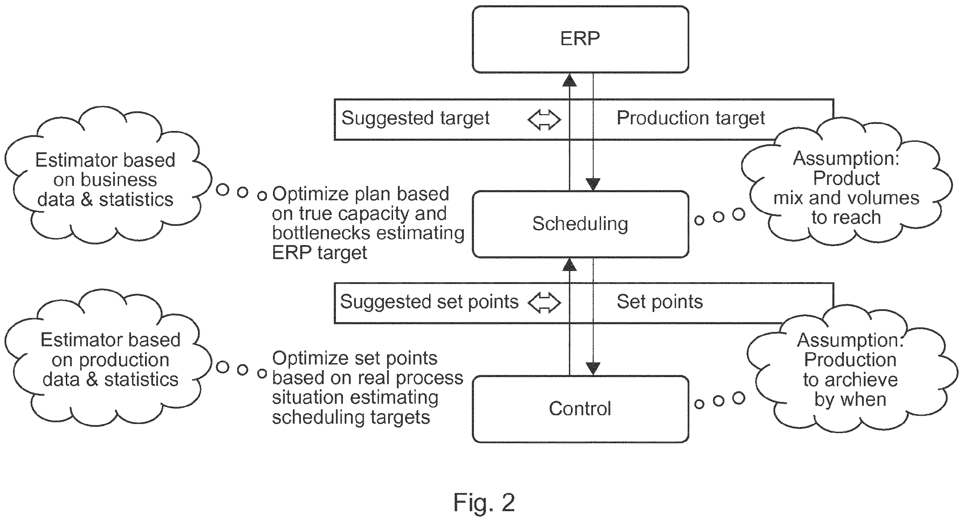

Figs. 2-3 relate to a method of collaborative production planning. In an example, a method of collaborative production planning comprises:
a) determining a top-down production schedule in a top-down manner, the determination comprising utilization of a known or determined target;
b) determining a bottom-up production schedule in a bottom-up manner, the determination comprising utilization of an estimated target; and
c) determining an optimised production schedule comprising comparing the top-down production schedule with the bottom-up production schedule, wherein the comparing comprises utilizing physical and business-level data.

Thus, an estimated target for the bottom-up production schedule can take into account the actual situation in a process plant that is not taken into account in the top-down production schedule. For example, a requirement can be to produce red paint, which leads to a top-down production schedule. However, an ingredient for red paint could be missing or equipment to make red paint could have a malfunction that would result in reduced quality. Then, in a bottom-up production schedule a different paint can be detailed to be produced with a different profit level. A negotiation scheme in effect runs between the two schedules that are updated iteratively, until the profit or KPI from both is the same or significantly the same.
In this manner, underestimating or overestimating production schedules is addressed, through appropriate sharing of information.

According to an example, the optimised production schedule is determined as the top-down production schedule when a value associated with the top-down production schedule is substantially equal to a value associated with the bottom-up production schedule

In this manner, in effect a value or goodness of a production schedule is used within a negotiation scheme to determine a required end result.
In an example, the value associated with the schedules is a profit or KPI of the schedules.

According to an example, when the value associated with the top-down production schedule is not equal to the value associated with the bottom-up production schedule, the method comprises:
d) determining a new target comprising utilization of the top-down production schedule from step a), the bottom-up production schedule from step b), the known or determined target from step a) and the estimated target from step b). The method then also comprises:
repeating step a) using the new target to determine a new top-down production schedule; and
repeating step c) using the new top-down production schedule.

Thus, in other words step a) is repeated again, where the new target as calculated in step d) is used to generate a new top-down production schedule. Then in effect step c) is repeated but with a new top down production schedule having been produced

According to an example, the optimised production schedule is determined as the new top-down production schedule when a value associated with the new top-down production schedule is equal to the value of the bottom-up production schedule.

According to an example, when the value associated with the new top-down production schedule is not equal to the value associated with the bottom-up production schedule, the method comprises:
repeating step b) using the new target to determine a new bottom-up production schedule; and
repeating step c) using the new bottom-up production schedule.

Thus, in effect step b) is then repeated but now using the new target rather than the initial estimated target, and then in effect step c) is repeated.
In other words, step b) is again executed, using a top-down target that is allowed to deviate in case there is estimation "freedom", where estimations become more refined using more true information from the above level.

According to an example, the optimised production schedule is determined as the new bottom-up production schedule when the value associated with the top-down production schedule is equal to a value associated with the new bottom-up production schedule.

According to an example, when the value associated with the top-down production schedule is not equal to the value associated with the new bottom-up production schedule, the method comprises:
repeating step d) and determining a revised new target comprising utilization of the top-down production schedule from step a), the new bottom-up production schedule, the known or determined target from step a) and the new target from step d);
repeating step a) using the revised new target to determine a new top-down production schedule; and
repeating step c) using the new top-down production schedule.

According to an example, the optimised production schedule is determined as the new top-down production schedule when the value associated with the new top-down production schedule is equal to the value associated with the bottom-up production schedule.

According to an example, when the value associated with the new top-down production schedule is not equal to the value associated with the bottom-up production schedule, the method comprises:
repeating step b) using the revised new target to determine a new bottom-up production schedule; and
repeating step c) using the the new bottom-up production schedule.

According to an example, the method is iteratively repeated to determine an optimised production schedule when the value associated with the production schedule determined in the top-down manner is substantially equal to the value associated with the production schedule determined in the bottom-up manner.

Continuing with the figures, the method will be described in further detail relating to specific embodiments.
Fig. 2 shows a collaborative two-way decision making process. To improve the planning quality, the collaborative scheme is used where also the underlying layer similarly assumes the "targets" from the above layer. Reflecting these, it optimizes bottom-up its own production as if the assumptions would be the given target. The result will be more realistic but of course the ERP-targets (in the upper part) may be not fully met. Therefore, the two targets are compared, and an Al technology can perform the negotiations between possible conflicts in the spirit of game theoretical approaches. The same technology applies also between P&S and control and all cases where a system gives a set point/target to a more detailed one. It can also be applied between control and process but since most processes are already closed-loop, this becomes irrelevant. P&S takes the ERP top-down targets but knowing the plant-floor physical situation (data) and questions whether the top-down target will realize in the best way on the plant floor. Therefore, it can use either some analytics methods to extend the given targets or prioritize them such that e.g. production gaps can be filled or in case of under capacity the correct orders can be removed. Machine learning (ML) methods, for example re-inforcement learning (ML), can also be utilized for decision making. Such data analytics / machines learning methods can also be used to estimate the targets or capability, i.e. not only in the comparison. ML for example can be used for forecasting engines based on existing data, for instance through supervised learning, and such techniques can be utilized here.

The ERP target is defined based on order data, which contains of product, amount, due/delivery dates. This is typically optimized by so called supply network planning that can consider several alternative production sites (plants), transportation costs, material stocks and nominal production capacities. The suggested ERP target is economically optimal but may be highly "theoretical", i.e. not at all meeting physical and dynamically changing constraints at each production site. Often this optimization step is done using linear programming (LP). Thus for example, ERP typically gets its input / production target for e.g. 1 week production from business systems (order management) and tries to realize the target on an assumption of factory capacity based on very rough, not online, assumptions. It bases an expected profit on an ERP-level model.

The production schedule should then reflect to this, i.e. fulfill the assigned production orders. The main elements to consider are the orders, production equipment, personnel, material and other resources. In scheduling, a detailed plan (timing) for all resources is made such that there are no overlapping activities, issues e.g. changeovers are handled correctly, it is assumed that all pieces of equipment operate on a given capacity (which can be highly dependent on the product or product sequence) and possible limitations on material stock levels (piles, silo) are considered as well as in many cases volatile energy prices. The methods for doing this can be either heuristics (forward/backward scheduling, bottleneck scheduling) or mathematical programming (typically mixed integer linear programming) or semi-heuristic such as evolutionary algorithms or a combination of the above.

The estimated ERP-target is generated by taking the given ERP-target (top-down), reflect it to the production capacity, identifying potential problems with e.g. too many changeovers, bottlenecks or over/underutilized capacity identified at the top-down schedule. This is supported by having online-access to true historical production data that can identify typical necessary changes, feasibility problems, corrective actions and quality / efficiency problems of producing certain products, looking into earlier ERP-targets and extrapolating possible missing orders, possibly correcting the capacity/cost assumptions by weather forecast data, maintenance/fleet condition information, electricity price forecasts etc. Thus the method involves processing the top-down ERP-target and making it more realistic, instead of just running it resulting into failure to meet them.

A simple but concrete example follows: ERP-target contains production of 150 ton of product A. There are two items of equipment able to do this, both with a nominal capacity of 80 tons for the considered period. Nevertheless, a maintenance activity must be performed during the planning period, which takes one of the parallel equipment down for 50% of the time. This results in a realistic available capacity of 120 tons of product A, i.e. leaving 30 tons behind. This can have two consequences: a) ERP-target is changed to 120 tons of A and fed back to the system to be considered on the business level, or b) the entire production of A is postponed if the setup costs are so high that producing only 150 tons is unpractical or not economical. Another possible change could be that due to the shortcoming of 30 tons of A, another capacity is freed up allowing the production of another product that was not indicated in the ERP-target but, based on available data, is very likely to appear on the following planning period.

To use the optimization functions on the negotiating parties is a good way to ensure that all aspects have been sufficiently considered (doing one large optimization is practically infeasible due to completely different granularity and scope). There are some game-theoretical approaches, e.g. Stackelberg game that can moderate between individual targets and find a balance that maximizes the global KPIs. For example, Stackelberg game has a leader and a follower, where the leader aims at satisfying the followers needs through parameter exchange but does not decide the details of each follower. The leader will also evaluate the overall "goodness" of the existing solution and stop the procedure. Another possible strategy is also to use simplified mathematical programs to directly balance / re-adjust the competing targets

In the case of Fig. 2, an example to aid in clarification is that at the scheduling level it is assumed that ERP targets contain a larger order base than communicated. Therefore, a better scheduling strategy can be to produce slightly more of a product than defined by top-down targets in order to avoid e.g. setup times and costs resulting from too many grade changes and small batches, or reduce the electricity costs by producing more energy-intensive grades during low-energy tariffs. The result of the scheduling optimization then becomes a suggested target that is pushed up and the negotiation scheme contains finding compromises between production and suggested targets such that the overall cost is reduced.

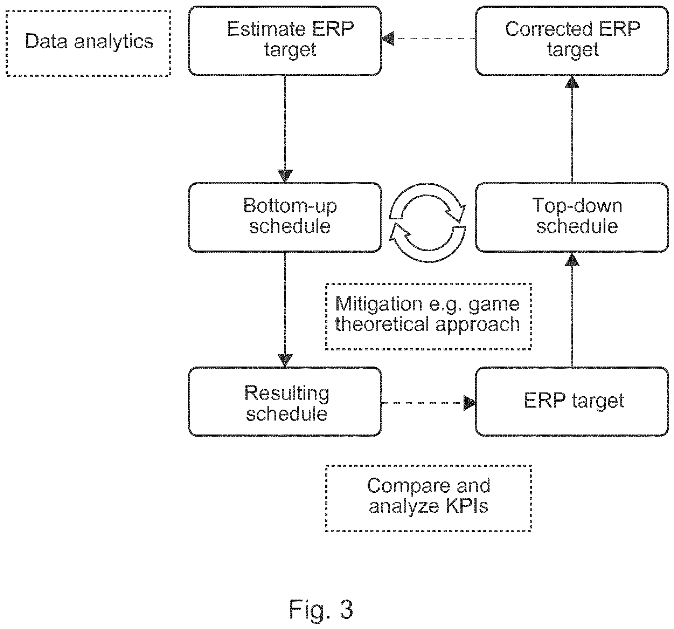

A workflow to resolve the mismatch and losses due to inexact top-down decision making is depicted in Fig. 3. The right-hand side of Fig. 2 would be the usual procedure but here as shown in Fig. 3 a mitigation process replaces a one-way hierarchical approach. The estimated ERP target can be derived e.g. by using data analytics or other information sources or forecasting tools, including physical events such as weather forecasts, logistics or production processes affecting the material flow. The bottom-up schedule is then generated to optimally meet those targets, typically the estimated target contains more orders thus giving the schedule the option to postpone or prepone some production requests, as well as, to ensure that the true production capacity will be fully utilized.

In case the resulting schedule is matching the ERP target (or overfulfilling it) there will be no further need for mitigation. In case this is not the case, a comparison is needed first formulating the correct KPIs (total costs, delays, supply chain violations). The game theoretical approach can adjust some coefficients for both bottom-up and top-down schedules, run them subsequently, identify improvements and deficits and calculate a "neutral" guidelining objective. Once a balance is found, the resulting ERP target is fed back to the estimator in order to improve its capability in creating more feasible schedules.

The same procedure can be repeated for the scheduling / control connection. Here, the physical process and its impact will play a stronger role, especially since the process dynamics affect the control layer and knowing some of the major factors can also be considered in the scheduling estimation of the control targets.

The method described here provides a paradigm change from the traditional top-down hierarchical procedures towards a data-analytics supported collaborative approach including various physical data. It can contribute to improvements since the mitigating entity would only accept global improvements (combining overall supply chain costs with detailed production costs) and thus worst-case result would be the top-down one.

The method can utilize the decision based on sensors, plant floor information, and physical states of equipment. Not only are schedules compared, but also the objectives (profit, KPI), and the schedules are adapted to increase the value function but the comparison between P&S / ERP candidates should be economical. Some marginal cost based approaches can be used to enable a fair "battle", where both sides can impact the end results. This step can use some game theoretical approach. The loop discussed here can be repeated as many times as needed. The methodology combines optimization with Al, where the Al points the direction and optimization solves the outcome. Parameters can be automatically updated by monitoring changes both at the market and factory level.

The solutions is potentially faster depending on the efficiency of mitigation as it reduces manual corrections or infeasibilities on production level. Also it can better mix long-term (ERP) and short-term (scheduling/control) target and limitation, e.g. environmental factors such as emission, energy need, waste production. Furthermore, as many of these can be represented through penalty costs, the main objective is to lower the overall production cost including various penalty and emission costs supported by more realistic set points.

### Al technology performed negotiations

The following provides further details on specific detailed features of the method. Al data analytics is used to estimate the ERP target. This is based on historical data from the sales and physical production and tries to find correlations (e.g. using covariance) and causalities (e.g. multiple regression or Granger causality) that can be both temporal or have other physical reasons between. In its simplest case it could conclude that in addition to the given ERP production orders, in the next period certain set of products will be ordered and thus the target includes also production that can fill any possible "gaps". Furthermore, the correlations can also detect e.g. weather-dependent production problem trends that for a given production site can be avoided by slight target shift.

The Stackelberg Game can be a good model here as we have two competing targets each do not know the details of each other. Nevertheless, the ERP entity (upper in other cases) should be seen as the leader due to business reasons. The main elements in the game will be the two possibly conflicting ERP targets and their realizations. The measurement (price function) is the objective function value of the scheduling (lower) level and can be compared for both ERP-target and estimated ERP-target. The difference is basically the driving force and the target is to find a Nash Equilibrium where the leader adapted target can be followed by the follower. It is important that the ERP-target will also be changed in order to estimate overall profitability and compensate for unmet production targets. One key point here is that given a fixed ERP target, the realized schedule using physical information from the plant may in first place not be able to fulfill the demand, and therefore the objective value of this is important.

Other ways to work on this could involve reinforcement learning by following how efficient the method is and whether it can be improved, e.g. the factor of how much emphasis should be put on the lower-level feasibility and optimality vs. the given target, which are the correct comparison strategies etc. This way the method can be improved during time.

### The following is a specific step-wise example of the collaborative method

1) ERP: produce 300 ton A, 200 ton B. Estimated profit 150 kUSD
2) P&S (top-down): can realize 280 ton A, 200 ton B due to XYZ. Estimated profit 140 kUSD (top-down)
3) P&S (bottom-up): will produce 320 ton A, 180 ton B. Estimated profit 145 kUSD, e.g. due to less changeover costs or less idle time
   a. This assumes that there will soon be orders for 20 ton A and delaying 20 tons B will not be a problem
4) ERP: verifies solution from 3) and estimates the profit to 148 kUSD for producing 315 ton A, 185 ton B
5) This continues in a loop using updated information at every round, doing negotiations until the profit of the two solutions are close enough to each other.

## Claims

1. A method of collaborative production planning, comprising:
a) determining a top-down production schedule in a top-down manner, the determination comprising utilization of a known or determined target;
b) determining a bottom-up production schedule in a bottom-up manner, the determination comprising utilization of an estimated target; and
c) determining an optimised production schedule comprising comparing the top-down production schedule with the bottom-up production schedule, wherein the comparing comprises utilizing physical and business-level data.

2. Method according to claim 1, wherein the optimised production schedule is determined as the top-down production schedule when a value associated with the top-down production schedule is substantially equal to a value associated with the bottom-up production schedule

3. Method according to claim 2, wherein when the value associated with the top-down production schedule is not equal to the value associated with the bottom-up production schedule, the method comprises:
d) determining a new target comprising utilization of the top-down production schedule from step a), the bottom-up production schedule from step b), the known or determined target from step a) and the estimated target from step b);
repeating step a) using the new target to determine a new top-down production schedule; and
repeating step c) using the new top-down production schedule.

4. Method according to claim 3, wherein the optimised production schedule is determined as the new top-down production schedule when a value associated with the new top-down production schedule is equal to the value of the bottom-up production schedule.

5. Method according to claim 4, wherein when the value associated with the new top-down production schedule is not equal to the value associated with the bottom-up production schedule, the method comprises:
repeating step b) using the new target to determine a new bottom-up production schedule; and
repeating step c) using the new bottom-up production schedule.

6. Method according to claim 5, wherein the optimised production schedule is determined as the new bottom-up production schedule when the value associated with the top-down production schedule is equal to a value associated with the new bottom-up production schedule.

7. Method according to claim 6, wherein when the value associated with the top-down production schedule is not equal to the value associated with the new bottom-up production schedule, the method comprises:
repeating step d) and determining a revised new target comprising utilization of the top-down production schedule from step a), the new bottom-up production schedule, the known or determined target from step a) and the new target from step d);
repeating step a) using the revised new target to determine a new top-down production schedule; and
repeating step c) using the new top-down production schedule.

8. Method according to claim 7, wherein the optimised production schedule is determined as the new top-down production schedule when the value associated with the new top-down production schedule is equal to the value associated with the bottom-up production schedule.

9. Method according to claim 8, wherein when the value associated with the new top-down production schedule is not equal to the value associated with the bottom-up production schedule, the method comprises:
repeating step b) using the revised new target to determine a new bottom-up production schedule; and
repeating step c) using the new bottom-up production schedule.

10. Method according to any of claims 1-9, wherein the method is iteratively repeated until to determine an optimised production schedule when the value associated with the production schedule determined in the top-down manner is substantially equal to the value associated with the production schedule determined in the bottom-up manner.
